# EUROPEAN PATENT APPLICATION

(11) **EP 1 892 621 A1**
(43) Date of publication of application: **27.02.2008**
(21) Application number: 07015295.4
(22) Date of filing: 03.08.2007
(51) Int. Cl.: G06F 9/44, G06F 3/00

(54) **Image design support tool**

(30) Priority: 03.08.2006 JP 2006212121
(71) Applicant: Hitachi, Ltd., Chiyoda-ku Tokyo 100-8280 (JP); CLARION Co., Ltd., Bunkyo-ku, Tokyo 112-8608 (JP)
(72) Inventor: Kujirai, Toshihiro c/o Hitachi Ltd., Chiyoda-ku Tokyo 100-8220 (JP); Fukaya, Naohiko c/o Hitachi Ltd., Chiyoda-ku Tokyo 100-8220 (JP); Atarashi, Yoshitaka c/o Hitachi Ltd., Chiyoda-ku Tokyo 100-8220 (JP); Doi, Keiji c/o Hitachi Ltd., Chiyoda-ku Tokyo 100-8220 (JP)
(74) Representative: Beetz & Partner

(57) **Abstract**

An image design support tool for designing a display image of an information terminal, which includes: storage means for storing a plurality of display images and an image group to which the display images belong; first setting means for setting a first display rule on each image group for displaying an interruption screen on an interruption event occurring; second setting means for setting a second display rule on each display image for the interruption screen on an interruption event occurring as an exception of the first display rule; and guidance means for generating and outputting guidance information on an image group to which the display image, to which the second display rule is applied, is transferred by using a difference between the first display rule and the second display rule.

## Description

### CROSS REFERENCE TO RELATED APPLICATIONS

This application claims the foreign priority benefit under Title 35, United States Code, §119(a) - (d) of Japanese Patent Application No. 2006-212121, filed on August 3, 2006, the contents of which are hereby incorporated by reference.

### BACKGROUND OF THE INVENTION

### 1. FIELD OF THE INVENTION

The present invention relates to a technology for supporting a design of an image which is displayed, for example, on a display of an on-vehicle navigation apparatus.

### 2. DESCRIPTION OF RELATED ART

In the on-vehicle navigation apparatus, an image for displaying, for example, map information, traffic jam information, and guidance point information is an important human-machine interface (HMI). Meanwhile, there is an on-vehicle navigation apparatus which has a function to inform a user of occurrence of an event with a pop-up image when the event such as a CD ejection, reception of traffic information, and reroute is detected. In the on-vehicle navigation apparatus described above, a method of how to display (including a case where no pop-up image id displayed) the pop-up image (interruption image) based on a current mode and a type of the occurred event is determined at a development stage of the HMI.

On the other hand, if, for example, a mode type, an image type corresponding to the mode type, and an interruption event type are increased, a display rule for an interruption image becomes complex, thereby resulting in complicated work for developing the HMI.

Conventionally, the display rule for interruption image has been expressed in a tabular form. An image type and an event type are associated with each other by, for example, arranging the image type corresponding to a mode type and the interruption event type in rows and columns, respectively. Thus, the display rule when an interruption event occurs has been defined for each interruption event.

The technology described above is disclosed in Japanese Patent Laid-open Publication No. 2005-208736.

However, to define a display rule one by one with a tabular form is troublesome, and a designer (user) can not understand the display rule intuitively. Therefore, it is hard for the user to define, revise, and check the display rule. In addition, it is not easy to get an image since the designer can not see how the interruption image is actually displayed.

It is, therefore, an object of the present invention to provide a tool which can intuitively define, revise, and check a display rule of an interruption image when an interruption event occurs, for solving the above issues.

### SUMMARY OF THE INVENTION

According to the present invention, there is provided an image design support tool for designing a display image of an information terminal, which includes: storage means for storing a plurality of display images and an image group to which the display images belong; first setting means for setting a first display rule on each image group for displaying an interruption image on an interruption event occurring; second setting means for setting a second display rule on each display image for the interruption image on an interruption event occurring as an exception of the first display rule; and guidance means for generating and outputting guidance information on an image group to which the display image, to which the second display rule is applied, is transferred by using a difference between the first display rule and the second display rule.

### BRIEF DESCRIPTION OF THE DRAWINGS

FIG. 1 is a schematic configuration diagram of an image design support tool according to an embodiment of the present invention;
FIG. 2 is a configuration diagram of image definition information;
FIG. 3 is a configuration diagram of image group definition information;
FIG. 4 is a configuration diagram of interruption event definition information;
FIG. 5 is a configuration diagram of image design definition information;
FIG. 6 is a configuration diagram of interruption image design definition information;
FIG. 7 is a configuration diagram of a common rule;
FIG. 8 is a configuration diagram of a by-image rule;
FIG. 9 is a configuration example of an interruption table;
FIG. 10 is a display example of a common rule setting image;
FIG. 11 is a display example of a by-image rule setting image;
FIG. 12 is a flowchart of a processing for obtaining a transfer candidate of an image group;
FIG. 13 is an illustration for explaining a processing for obtaining a transfer candidate of an image group;
FIG. 14 is a flowchart of a processing for displaying an image; and
FIG. 15 is a flowchart of a processing for determining an image group of a new image.

### DETAILED DESCRIPTION OF THE PREFERRED EMBODIMENT

Hereinafter, an embodiment of the present invention will be explained by referring to figures.

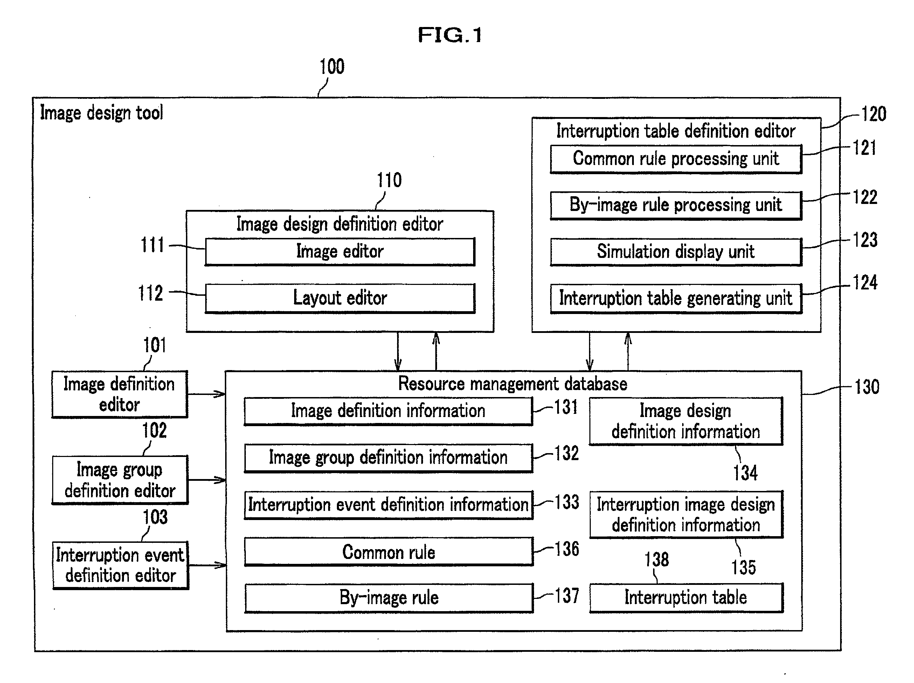

FIG. 1 is a schematic configuration of an image design support tool 100 according to an embodiment of the present invention. The image design support tool 100 is a tool for supporting a design of an image, which serves as a human-machine interface (HMI), displayed on a display of an on-vehicle navigation apparatus.

The image design support tool 100 is configured with a general-purpose computer system which includes, for example, an arithmetic unit such as a CPU, a storage unit such as a memory and an HDD (Hard Disc Drive), a display unit such as a liquid crystal display, and an input unit such as a keyboard and a mouse. Individual components and functions, which will be described later, are realized and achieved when the CPU executes a predetermined program. In addition, storage such as a RAM (Random Access Memory) and HDD is used for storing data.

In the explanation hereinafter, an ordinary display image in some mode is called a "normal image" and an image which is displayed when an interruption event occurred is called an "interruption image", among images displayed on a display of the on-vehicle navigation apparatus. The "interruption image" may be a temporary pop-up image, and may be an image corresponding to a "normal image" in the next mode if the mode is changed.

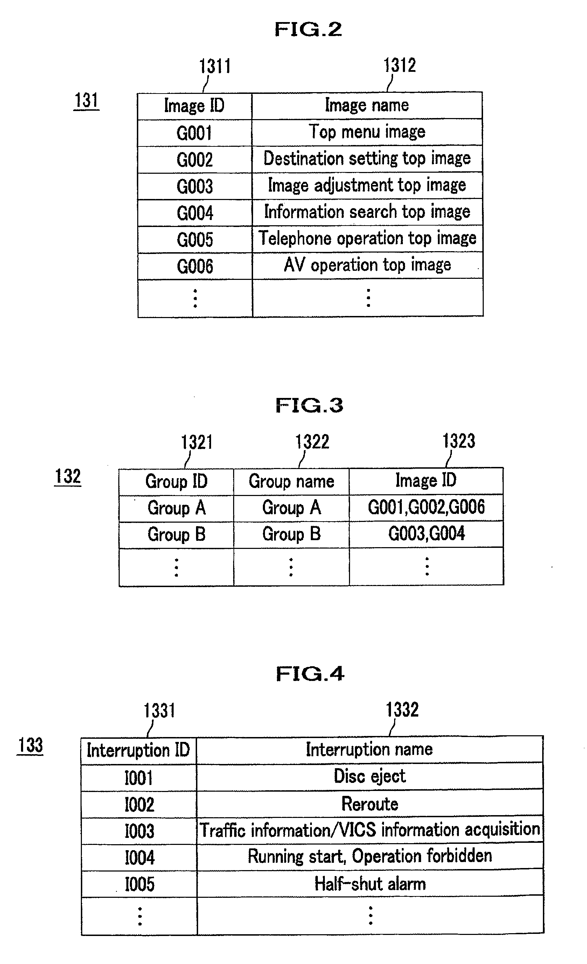

The image design support tool 100 includes an image definition editor 101, an image group definition editor 102, an interruption event definition editor 103, an image design definition editor 110, an interruption table definition editor 120, and a resource management database 130. Hereinafter, the explanation will be made by referring to FIG. 2 to FIG. 9 as well as FIG. 1.

The image definition editor 101 executes processings of registration and edit of image definition information 131 according to an input of instruction from a user.

As shown in FIG. 2, the image definition information 131 includes a code (image ID) 1311 for identifying a "normal image" and a name of the image (image name) 1312. The image name 1312 includes, for example, a "top menu image", a "destination setting top image", an "image adjustment top image", an "information search top image", a "telephone operation top image", and an "AV operation top image".

The image group definition editor 102 executes processings of registration and edit of image group definition information 132 according to an input of instruction from a user.

As shown in FIG. 3, the image group definition information 132 includes a code (image group ID) 1321 identifying an image group, a group name 1322, and an image ID 1323 (corresponding to image ID 1311) of a "normal image" which belongs to the image group. It is noted that any "normal image" belongs to any one of image groups.

The interruption event definition editor 103 executes processings of registration and edit of interruption event definition information 133 according to an input of instruction from a user.

As shown in FIG. 4, the interruption event definition information 133 includes a code (interruption code) 1331 identifying an interruption event and a name of the interruption event 1332 (interruption name). The interruption name 1332 includes, for example, a "disc (for example, CD) eject", a "reroute (route re-search when the route deviates from a normal route)", a "traffic information (VICS: Vehicle Information Communication System information) acquisition", a "drive start, operation forbidden", and a "half-shut alarm". It is noted that if an HMI designed by the image design support tool 100 is installed in an on-vehicle navigation apparatus, the on-vehicle navigation apparatus displays (pop-up displays) the "interruption image" when the apparatus receives a signal informing an interruption event. Therefore, the interruption name 1332 is associated with a signal type informing the interruption event.

The image design definition editor 110 executes processings of registration and edit of an image design ("normal image" and "interruption image" included) according to an input of instruction from a user. For this purpose, the image design definition editor 110 includes an image editor 111 which registers and edits images and a layout editor 112 which registers and edits a layout (arrangement) of characters and images. In addition, the image design definition editor 110 registers and edits image design definition information 134 defining a design of a "normal image" and interruption image design definition information 135 defining a design of an "interruption image".

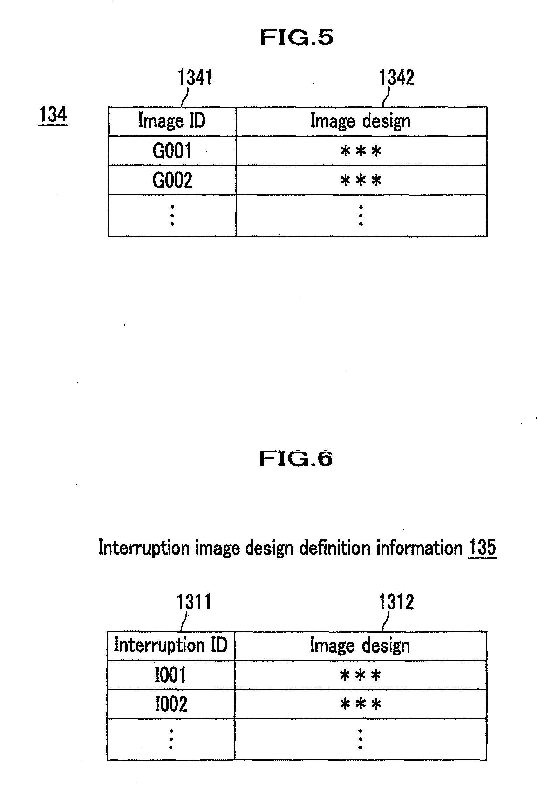

As shown in FIG. 5, the image design definition information 134 defining a design of the "normal image" includes an image ID 1341 (corresponding to the image ID 1311) and an image design 1342. The image design 1342 is, for example, information specifying arrangements of characters and images to be displayed in a tag format. The images may be included in the image design 1342, or may be stored separately in the resource management database 130.

As shown in FIG. 6, the interruption image design definition information 135 defining a design of the "interruption image" includes an interruption ID 1351 (corresponding to interruption ID 1331) and an image design 1352. The image design 1352 is, for example, information specifying arrangements of characters and images to be displayed in a tag format, as with the image design 1342 of the "normal image" described above. The images may be included in the image design 1352, or may be stored separately in the resource management database 130.

The interruption table definition editor 120 executes processings of, for example, a display rule setting of an "interruption image", a simulation, and a generation of an interruption table. For this purpose, the interruption table definition editor 120 includes a common rule processing unit 121, a by-image rule processing unit 122, a simulation display unit 123, and an interruption table generating unit 124.

The common rule processing unit 121 executes processings of registration and edit of a common rule 136 which is applied to each image group.

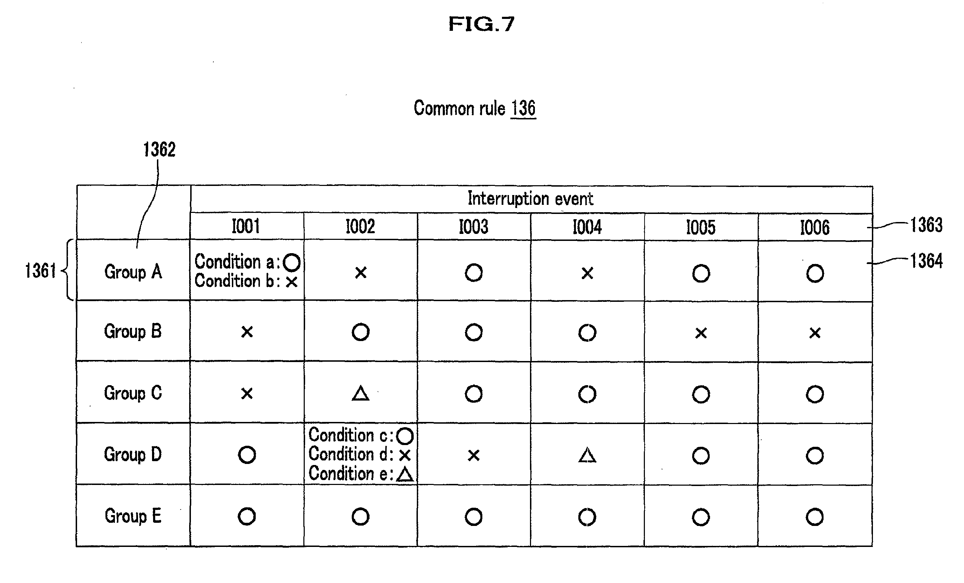

As shown in FIG. 7, the common rule 136 includes a record 1361 for each image group. In each record 1361, an image group ID 1362 (corresponding to image group ID 1321 described above) and a display rule 1364 of an "interruption image" for each interruption event 1363 are stored. It is noted that in the display rule 1364, a rule for how to display (whether to display or not to display and how to display, included) the "interruption image" when an interruption event occurs is stored. For example, there are three patterns in the display rule, that is, 1) To display the "interruption image" immediately when an interruption event occurs ("O" in FIG. 7), 2) To display the "interruption image" after a predetermined time elapsed when an interruption event occurs ("Δ" in FIG. 7), and 3) Not to display the "interruption image" even if an interruption event occurs ("X" in FIG. 7). In addition, when the display is changed according to a condition, the condition and its display rule are stored in the display rule 1364 (see condition a: "O", condition b: "X" in FIG. 7).

The by-image rule processing unit 122 executes processings of registration and edit of a by-image rule 137 which is preferentially applied prior to the group common rule 136.

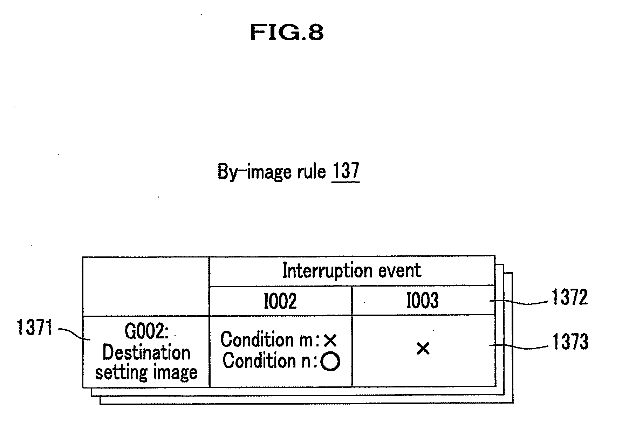

As shown in FIG. 8, the by-image rule 137 includes an image ID 1371 (corresponding to image ID 1311) of a "normal image", an interruption ID 1372 (corresponding to interruption ID 1331), and a display rule 1373 of an "interruption image".

As described later, a display of an "interruption image" when an interruption event occurs during a display of some "normal image" basically follows the display rule 1364 of the common rule 136 of an image group to which the "normal image" belongs. However, if the by-image rule 137 exists and if the display rule 1373 corresponding to the interruption ID 1372 of the occurred event exists with respect to the "normal image", the display rule 1373 of the by-image rule 137 is applied instead of the group common rule 136.

The simulation display unit 123 displays a simulated image at a time when an interruption event occurs. That is, a display of how an "interruption image" will be displayed is displayed on a display of the image design support tool 100, assuming that the interruption event occurs during a display of some "normal image".

The interruption table generating unit 124 generates and outputs a list of a display of an "interruption image" (called "interruption table") 138 using the common rule 136 and by-image rule 137.

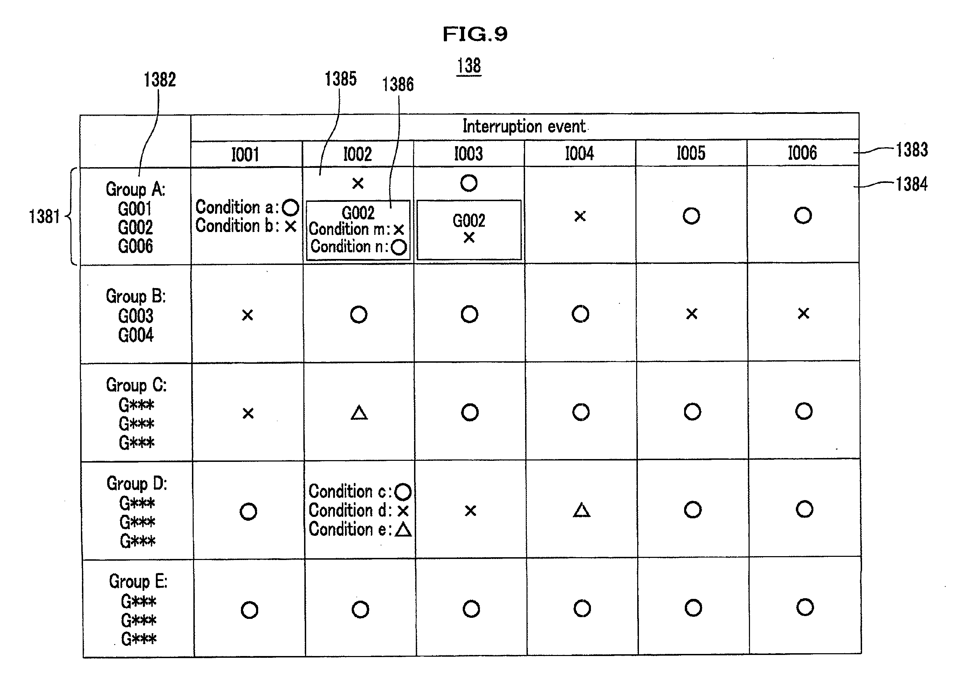

As shown in FIG. 9, the interruption table 138 is a combination table of the common rule 136 and the by-image rule 137, which is an exception of the common rule 136. The interruption table 138 is composed of a record 1381 of each of the image groups. An image group ID 1382 (an image group name and an image ID of a "normal image" which belongs to the image group may be included) and a display rule 1384 of an "interruption image" for each interruption event 1383 are stored in each record 1381. In the display rule 1384, a display rule 1385 extracted from the display rule 1364 of the common rule 136 and a display rule 1386 extracted from the display rule 1373 of the by-image rule 137 are stored. That is, if the interruption table 138 is referred to, the common rule 136 and the by-image rule 137, which is the exception of the common rule 136, are simultaneously understood.

It is noted that the interruption table 138 is displayed on a display of the image design support tool 100 if a user requests a display of the interruption table 138 through an input apparatus.

The image definition information 131, the image group definition information 132, the interruption event definition information 133, the image design definition information 134, the interruption image design definition information 135, the common rule 136, the by-image rule 137, and the interruption table 138, which are described above, are stored in the resource management database 130.

### <EXPLANATION OF OPERATION>

Next, unique operations of the image design support tool 100 according to the embodiment will be explained.

The image design support tool 100 is, as described above, a tool for supporting a design of an image which is displayed on a display of an on-vehicle navigation apparatus. First, a summary of the operations will be explained.

The on-vehicle navigation apparatus usually displays, in some mode (for example, destination setting mode), an image for the mode (for example, destination setting top image). On the other hand, the on-vehicle navigation apparatus is designed to start an interruption process (for example, CD eject process) corresponding to an event if the event (for example, CD eject) is detected. In this case, a pop-up image (for example, pop-up image showing "CD eject") informing the detection of the interruption event is displayed on a display currently being displayed (for example, destination setting top image).

It is noted that in an on-vehicle navigation apparatus, an event such as a CD eject, reroute, reception of traffic information, and detection of a running vehicle, which has no relation with a current mode, is frequently detected during a processing of the current mode. This is a different feature of the on-vehicle navigation apparatus from that of usual information processing apparatus. However, in this case, it is not always appropriate to display the "interruption image", which informs occurrence of an event, for all events. For example, it is meaningless to display an image informing a reroute when the destination setting image is displayed even if the route deviates from the normal route.

Therefore, in a design of HMI of an on-vehicle navigation apparatus, it is necessary to define a display rule (for example, to display or not to display and how to display, if displayed) in detail for the display of the "interruption image" when occurrence of an event is detected.

However, since there are many modes in an on-vehicle navigation apparatus, there are types of the "normal image" corresponding to each of the modes. In addition, a type of event to be detected is also many. Therefore, it is troublesome to appropriately setting a display rule of the "interruption image" in detail for each of various conditions.

Accordingly, in the embodiment, a display rule is made to be set for each image group for simplifying the setting of the display rule of the "interruption image", assuming that any "normal image" belongs to any one of image groups. In addition, for the display of the "interruption image", a display rule (common rule) of the image group to which the "normal image", which is currently being displayed, belongs is basically applied.

On the other hand, inconveniences may be caused in some cases if all cases comply with the common rule. For example, as described above, if a reroute is executed by detecting that a current position is out of the normal route when the mode is a destination setting mode, the reroute is detected as an interruption event in this case. However, since the user is trying to reconsider the destination, it is nonsense to display a pop-up image which indicates the reroute. The pop-up image may be rather disturbances for a user operation.

Therefore, as an exception of the common rule, a display (to display or not to display, included) rule (called as "by-image rule") of an "interruption image" when an event occurs can be set for each "normal image" in the embodiment.

In addition, the image design support tool 100 guides a candidate group to which the "normal image", in which a "by-image rule" is set, may be transferred (hereinafter, referred to as "family group"). As described above, since the by-image rule is an exception rule of a common rule, the "normal image" in which the "by-image rule" is set is a peculiar "normal image". However, if the peculiar "normal image", in which the "by-image rule" is set, can belong by chance to another group, a common ground of the display rule may be increased, and the peculiar "normal image" has less unusualness. In other words, the image design support tool 100 searches whether or not there is an appropriate image group for the peculiar "normal image" from view point of maintaining common ground of the display rule, and outputs a result of the search. Through the process described above, the "normal image" can be transferred to an image group in which the unusualness is decreased. In addition, since the "normal image" in which an unusual by-image rule is set is reduced in number, a data volume can also be reduced. In addition, in the on-vehicle navigation apparatus, a frequency of applying the common rule is increased, thereby resulting in speed up of the processing.

Hereinafter, (1) Common rule setting processing, (2) By-image rule setting processing, (3) Guidance processing of transfer candidate image group, (4) Simulation display processing of interruption image, (5) Image group determination processing of new "normal image", and (6) Division processing of image group, will be explained specifically in detail.

It is noted that explanations will be made, assuming that the followings which are required for processings to be explained hereinafter are registered in advance in the image design support tool 100: the image definition information 131, the image group definition information 132, the interruption event definition information 133, the image design definition information 134, and the interruption image design definition information 135.

### (1) Common rule setting processing

First a common rule setting processing, which is executed by the common rule processing unit 121, will be explained.

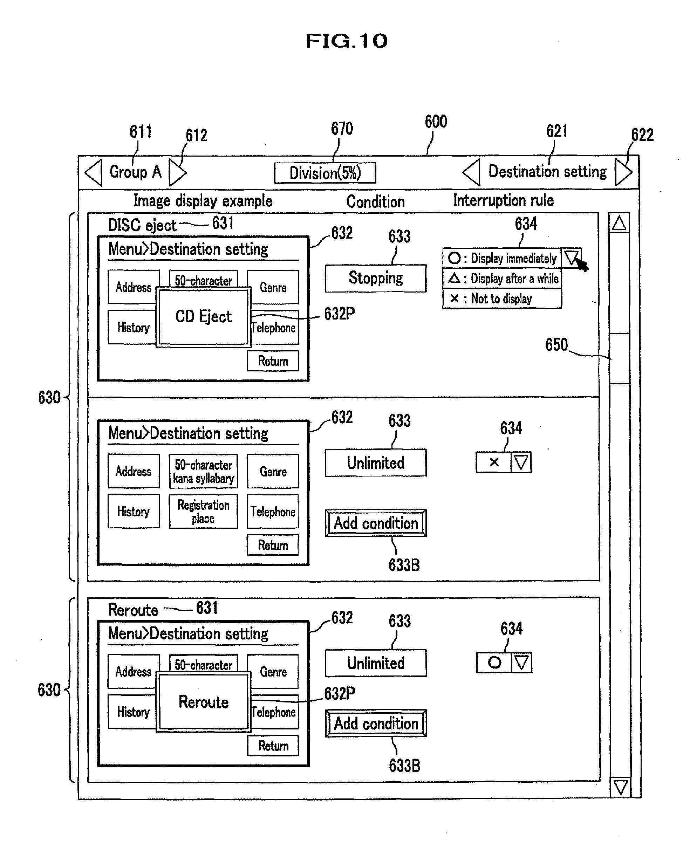

The common rule processing unit 121 receives an instruction of setting the common rule 136 through an input apparatus from a user. At this time, as shown in FIG. 10, a common rule setting image 600 is displayed on a display of the image design support tool 100.

As shown in FIG. 10, the common rule setting image 600 includes a group ID 611 (group name may be available) of an image group selected by a user for setting a common rule, a switching button 612 of the group ID 611, a name 621 of any one of "normal images" which belong to the image group, a switching button 622 of the name 621, a region 630 (by-event display rule setting region) for setting a display rule for each event, and a scroll bar 650 for scrolling the by-event display rule setting region 630.

In the by-event display rule setting region 630, an event name 631, a simulation image 632 for displaying a simulated image which is an image to be displayed on a display of the on-vehicle navigation apparatus, a display rule applying condition 633, a button 633B for receiving an additional display rule applying condition, and a pull-down menu 634 for receiving selection of the display rule, are displayed.

It is noted that the simulation image 632 is displayed based on information generated by the simulation display unit 123. If the display rule is set to display the "interruption image", an interruption image 632P is superimposed on the "normal image".

The by-event display rule setting region 630 is prepared for each event. In addition, the region 630 is prepared as many as a number of conditions for the same event. In FIG. 10, two regions are displayed for two conditions, "stopping" and "unlimited". It is noted that the "unlimited" means a case (for example, "driving") in which the condition does not correspond to any other conditions ("stopping") set in advance.

When the switching button 612 of the image group is clicked, the common rule processing unit 121 extracts a group ID 1321 of an image group which is registered next to an image group currently being selected (being displayed) from the group ID 1321 of the image group definition information 132 shown in FIG. 3, and displays the group ID 1321 on the group setting image 600. It is noted that a group name 1322 corresponding to the group ID 1321 may be displayed.

When the switching button 612 of the "normal image" is clicked, the common rule processing unit 121 extracts an image name 1312 of the "normal image" which is registered next to the "normal image" currently being selected (being displayed) from the image ID 1311 of the image definition information 131 shown in FIG. 2, and displays the image name 1312 on the group setting image 600.

Meanwhile, regardless of the name 621 of the selected "normal image", a display rule (common rule) which is common to the "normal images" which belong to an image group of the group ID 611 is set in the common rule setting processing. That is, if a user changes the name 621 of the "normal image", the simulation image 632 is changed. However, the applying condition 633 and the display rule 634 are not changed.

When the additional condition button 633B is clicked, the common rule processing unit 121 adds an applying condition of the display rule from applying conditions registered in advance by a selection of a user. It is noted that a plurality of applying conditions can be set.

The common rule processing unit 121 receives a selection of a display rule of an "interruption image" through the pull-down menu 634.

The common rule processing unit 121 generates the common rule 136 as shown in FIG. 7 by grouping selected display rules into an image group, an event, and an applying condition.

As described above, the common rule setting processing has been explained.

### (2) By-image rule setting processing

Next, a by-image rule setting processing will be explained.

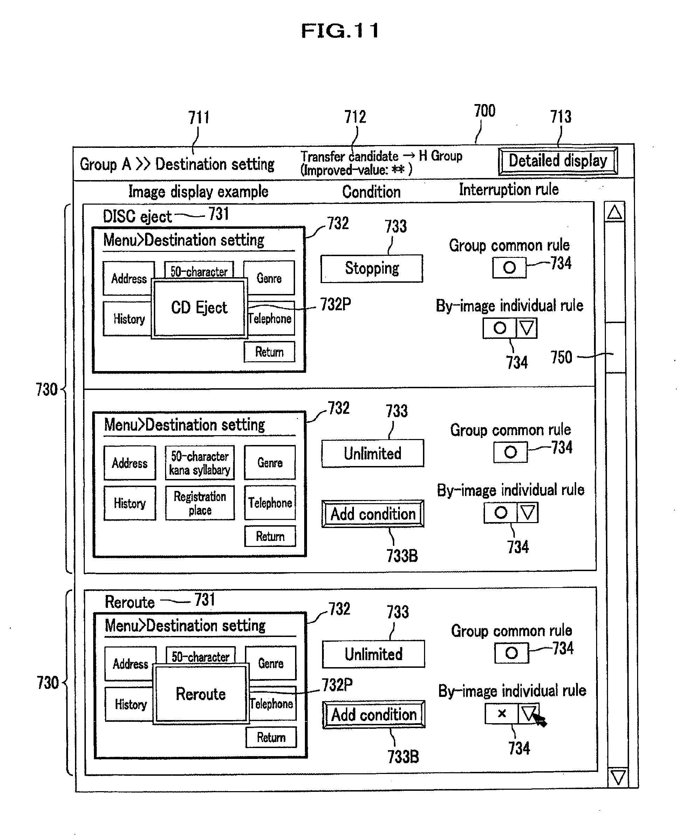

The by-image rule processing unit 122 receives an instruction of setting the by-image rule 137 through an input apparatus from a user. At this time, as shown in FIG. 11, a by-image rule setting image 700 is displayed on a display of the image design support tool 100. A constitution of the by-image rule setting image 700 is basically identical to that of the common rule setting image 600 described above.

That is, in the by-image rule setting image 700, a name 711 (group ID and group name to which "normal image" belongs may be displayed) of the "normal image" selected by the user for setting the by-image rule 137, a region (by-event display rule setting region) 730 for setting a display rule for each event, and a scroll bar 750 for scrolling the by-event display rule setting region 730, are displayed.

In the by-event display rule setting region 730, an event name 731, a simulation image 732 for displaying a simulated image which is an image to be displayed on a display of the on-vehicle navigation apparatus, a display rule applying condition 733, a button 733B for receiving an additional display rule applying condition, a common rule 734, and a pull-down menu 734 for receiving a selection of the display rule, are displayed.

It is noted that the simulation image 731 is displayed based on information generated by the simulation display unit 123. If the display rule is set to display an "interruption image", an interruption image 732P is superimposed on the "normal image".

The by-image rule processing unit 122 extracts a common rule 734 to be displayed in the by-event display rule setting region 730 from the common rule 136 shown in FIG. 7, and displays the common rule 734 in the region 730. That is, first, the by-image rule processing unit 122 identifies a group ID 1321 corresponding to an image ID of the "normal image" currently being selected from the group definition information 1321; Then, extracts a display rule 1364, which has a group ID 1362 corresponding to the identified group ID 1321 and corresponds to an event in the by-event display rule setting region 730, from the common rule 136, and displays the display rule 1364 as a common rule 734.

In addition, when the additional condition button 733B is clicked, the by-image rule processing unit 122 adds an applying condition of the display rule from applying conditions registered in advance by a selection of a user. It is noted that a plurality of applying conditions can be set.

The by-image rule processing unit 122 receives a selection of a display rule of an "interruption image" when an event occurs through a pull-down menu 735.

In addition, the by-image rule processing unit 122 generates the by-image rule 137 as shown in FIG. 8 by grouping the selected display rules into each event and associating the selected display rules with the selected "normal image" type.

As described above, the by-image rule setting processing has been explained.

### (3) Guidance processing of transfer candidate image group

The image design support tool 100 according to the embodiment has a function to guide a transfer candidate of an image group when a by-image rule is set. Therefore, the by-image rule processing unit 122 executes a processing for obtaining the transfer candidate of an image group of the "normal image", in which the by-image rule is set, every time when the by-image rule is set. In addition, the by-image rule processing unit 122 obtains a reduction level of difference (improved-value) in the display rule when the image group of the "normal image" is changed, and displays the improved-value.

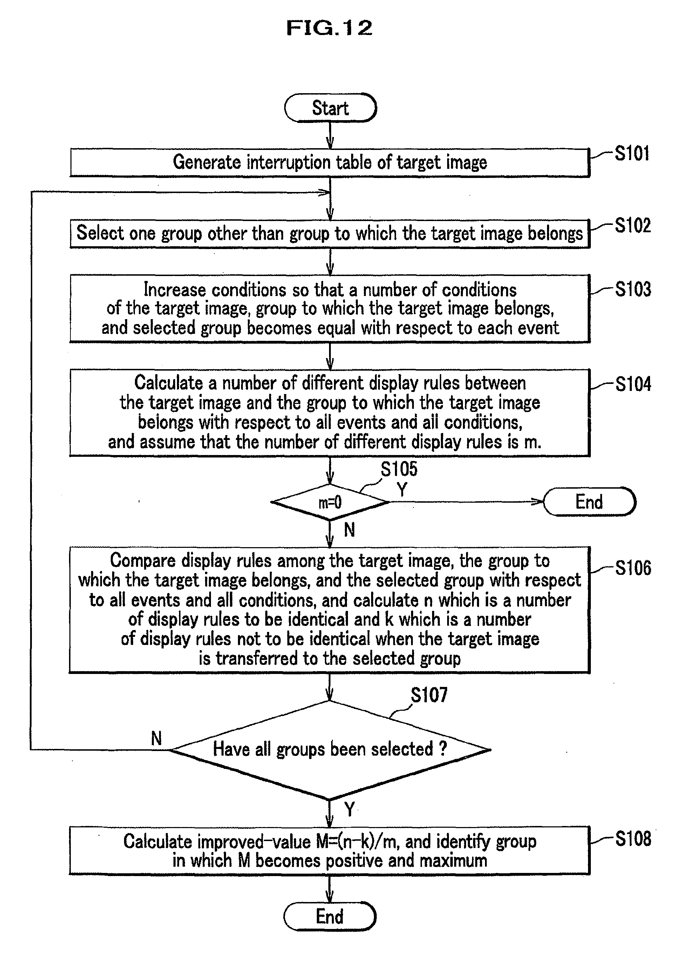

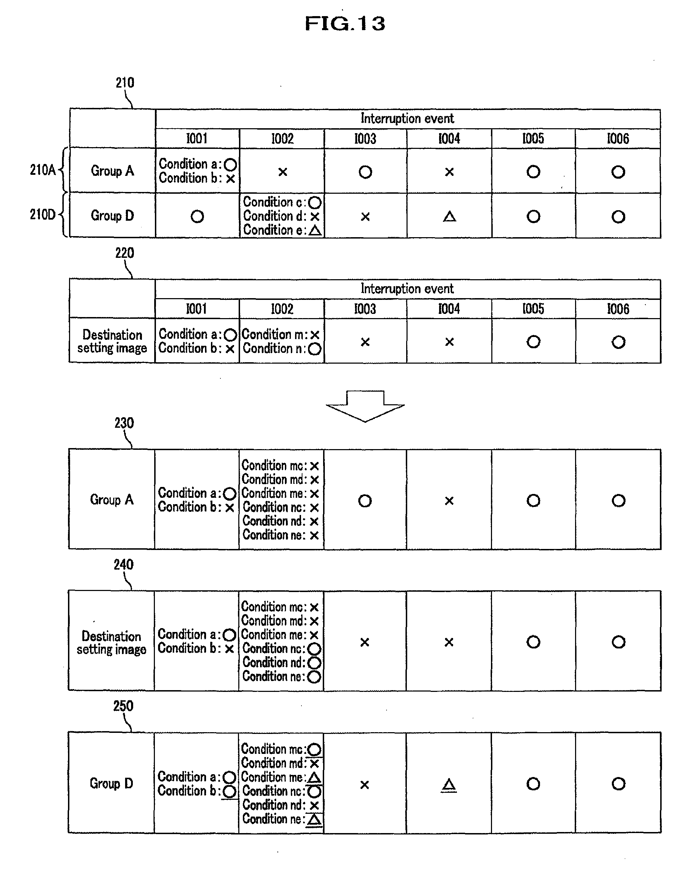

FIG. 12 is a flowchart of a processing for obtaining a transfer candidate of an image group and the improved-value when the image group thereof is transferred. FIG. 13 is a schematic illustration for explaining a flow in FIG. 12. Here, as an example, it is assumed that a by-image rule is set in the "destination setting image", which belongs to "group A".

The by-image rule processing unit 122 generates (S101) an interruption table 220 of the "normal image", which is a processing target (called as "target image").

Specifically, first, the by-image rule processing unit 122 obtains the by-image rule 137 of the target image, using the image ID 1371 as a key. On the other hand, the by-image rule processing unit 122 obtains the record 1361 (record 210A in FIG. 13) of an image group to which the target image belongs from the common rule 136, using a group ID 1362 as a key. Then, the by-image rule processing unit 122 generates the interruption table 220 of the target image by combining the obtained by-image rule 137 and the record 1361 of the image group to which the target image belongs. In this case, a set of event and display rule, which is included in the by-image rule 137, is used as it is. On the other hand, a set of event and display rule, which is not included in the by-image rule 137, uses a set of event and display rule of the image group to which the target image belongs. That is, the by-image rule 137 is preferentially stored.

In FIG. 13, the interruption table 220 of the "destination setting image" which belongs to "group A" is shown. As shown in FIG. 8, "condition m: X, condition n: O" for an interruption event I002 and "X" for an interruption event I003 are stored in the by-image rule 137 of the target image. Therefore, contents of the by-image rule 137 are stored with respect to the events 1002, 1003 in the interruption table 220 of the "destination setting image". On the other hand, contents of the common rule 210A of the "group A" are stored with respect to the other events I001, I004 ,,,.

Next, the by-image rule processing unit 122 sequentially selects one group ID of an image group other than the image group to which the target image belongs from the group ID 1321 of the group definition information 132. Then, the by-image rule processing unit 122 obtains the record 1361 of the selected image group from the common rule 136. In FIG. 13, a record 210D of "group D" is selected.

In addition, the by-image rule processing unit 122 increases conditions of the common rule 210A of an image group (referred to as family group) to which the target image belongs, conditions of the common rule 210D of the group selected in S102, and conditions of the interruption table 220 of the target image so that the number of conditions for each event becomes equal in the common rule 210A, in the common rule 210D, and in the interruption table 220, respectively (S103).

As for the example in FIG. 13, in the interruption table 220 of the target image, a condition for event I001 is two, "condition a" and "condition b". A condition for the event I001 of the "group A", which is the family group, is also two, "condition a" and "condition b". On the other hand, a condition for the event I001 of "group D" is a single, "unlimited". It is noted that the "unlimited" means "unlimited in any conditions". In this case, for making the number of conditions equal with respect to the "group D", the two conditions, "condition a" and "condition b", are added to the event I001, and "O", which corresponds to a display rule of the "unlimited", is stored in each condition, such as, "condition a: O, condition b: O".

In addition, in event I002, a display rule of the "group A" is a single, "unlimited", a display rule of the "group D" is three, "condition c", "condition d", and "condition e", and a display rule of a target image is two, "condition m" and "condition n". Therefore, the condition of the event I002 is increased to six, "condition mc", "condition md", "condition me", "condition nc", "condition nd", and "condition ne". It is noted an expression of "condition xy" means to comply with both conditions, "condition x" and "condition y".

After increasing the conditions as described above, the by-image rule processing unit 122 obtains a number of display rules m which are different between the interruption table 240 after increasing the conditions of the target image and the common rule 230 after increasing the conditions of the family group, for all events and all conditions (S104).

In the example in FIG. 13, the display rule of the target image is different from that of the "group A" in four points, that is, "condition nc: O", "condition nd: O", and "condition ne: O" for the event I002 and "unlimited" for event I003 (m=4).

When m=0 (S105: Y), that is, when the display rule of the target image is entirely identical to that of the family group, the by-image rule processing unit 122 ends the processing since a transfer of the image group is unnecessary.

On the other hand, when m is not 0 (S105: N), the by-image rule processing unit 122 compares the interruption table 240 after increasing the conditions of the target image, the common rule 230 after increasing the conditions of the family group, and the common rule 250 after increasing the conditions of the selected group, with respect to all events and all conditions, and obtains a number of display rules n to be identical and a number of display rule k not to be identical when the family group of the target image is transferred to the selected image group (S106).

In the example in FIG. 13, a rule to be identical when the family group is transferred from the "group A" to "group D" is two, that is, "condition nc: O" for the event I002 and "unlimited : X" for the event I003 (n=2).

On the other hand, the number of rule not to be identical when the family group is transferred from the "group A" to "group D" is six, that is, "condition b: X" for the event I001, "condition mc: X", "condition me: X", "condition nd: O", and "condition ne: O" for the event I002 and "unlimited: Δ" for event I004 (m=6).

After completing the processings (S102 to S106) described above for all image groups (S107: Y), the by-image rule processing unit 122 obtains an improved-value M=(n-k)/m for each image group, and identifies an image group which has a positive and maximum improved-value M as a transfer candidate (S108).

When the transfer candidate of the image group is identified as described above, the by-image rule processing unit 122 displays the identified transfer candidate 712 on the by-image rule setting image 700, as shown in FIG. 11. In addition, the improved-value M when the image group is transferred to the transfer candidate 712 is also displayed on the by-image rule setting image 700. A button 713 for receiving an instruction of detailed display is displayed on the image 700.

When the by-image rule processing unit 122 receives a request for the detailed display through an input apparatus from a user, the by-image rule processing unit 122 displays a condition in which a display rule is to be identical and a condition in which a display rule is not to be identical when the target image is transferred to the transfer candidate. For example, by displaying a common rule 250 in which the conditions are increased as shown in FIG. 13, the condition to be identical, the condition not to be identical, and a condition not to be changed may be displayed by changing a display mode (for example, with different colors).

In addition, if the display mode changes before and after the transfer of the family group, a feature to be changed of the display mode may be displayed. For example, a display position (for example, center or bottom) of an "interruption image" is defined in the display rule. When the display positions of the common rule and by-image rule are different, the display mode changes before and after the transfer of the family group. In this case, a display of an "interruption image" to which a common rule of the family group before the transfer is applied, a display of an "interruption image" to which the by-image rule is applied, and a display of an "interruption image" to which a common rule of the transfer candidate is applied may be displayed all together. From the display described above, it becomes clear to the user what condition is to be identical, or not to be identical before and after the transfer of the family group.

It is noted that a method for obtaining a transfer candidate is not limited to the above. A method for obtaining the improved-value M is also not limited to the above. Instead of a direct summation of the number of conditions for obtaining n and k, a weighted value may be used, for example, by making the summation after multiplying coefficients to a condition and event based on their types. A type of the improved-value M may be adopted as needed.

### (4) Simulation display processing of interruption image

Next, a simulation display which is executed by the simulation display unit 123 will be explained when an interruption event occurs.

As simulation images 631, 731 shown in FIG. 10 and FIG. 11, the image design support tool 100 can display a simulated image of a display of an on-vehicle navigation apparatus when an interruption event occurs. In this case, even if an image design is not completely defined by a user, an alternative display can be displayed for getting a screen image easily.

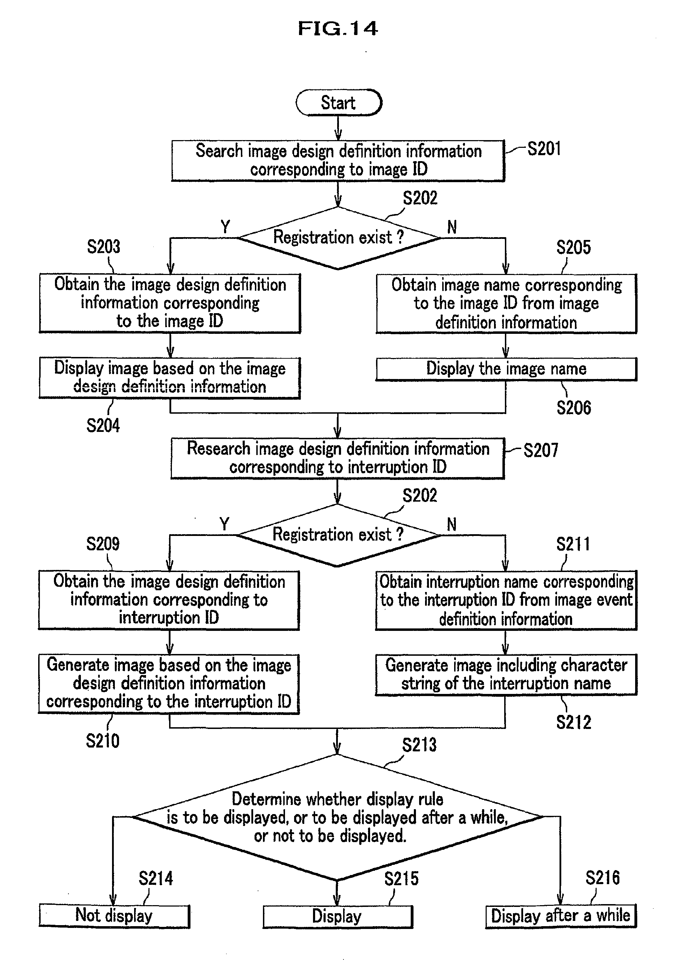

FIG. 14 is a flowchart of a processing for the display described above.

First, the simulation display unit 123 checks whether or not an image design 1342 corresponding to an image ID 1341 of a "normal image", which is to be displayed, is registered in the image design definition information 134.

If the image design 1342 is registered (S202: Y), the simulation display unit 123 obtains the image design 1342 corresponding to the image ID 1341 from the image design definition information 134 (S203), using the image ID 1341 as a key, and displays an image based on the obtained image design 1342 (S204).

On the other hand, if the image design 1342 is not registered (S202: N), the simulation display unit 123 obtains (S205) the image name 1312 corresponding to the image ID 1311 from the image definition information 131, using the image ID 1311 as a key, and displays an image in which the obtained image name is arranged in a predetermined position (S206).

Next, the simulation display unit 123 checks whether or not an image design 1352 corresponding to an image ID 1351 of an "interruption image", which is to be displayed, is registered in the interruption image design definition information 135.

If the image design 1352 is registered (S208: Y), the simulation display unit 123 obtains (S209) the image design 1352 corresponding to the image ID 1351 from the interruption image design definition information 135, using the image ID 1351 as a key, and generates (S210) an image picture ("interruption image") based on the obtained image design.

On the other hand, if the image design 1352 is not registered (S208: N), the simulation display unit 123 obtains (S211) the interruption name 1332 corresponding to the interruption ID 1331 from the interruption event definition information 133, using the interruption ID 1331 as a key, and generates (S212) an image picture ("interruption image") in which the obtained interruption name (text) is arranged in a predetermined position.

Then, the simulation display unit 123 checks a display rule of the "interruption image" (S213), and if the display rule is "X: not to display", the "interruption image" is not displayed (S214). On the other hand, the display rule is "O: to display", the "interruption image" is superimposed on the image displayed in S204 or S206 (S215). In addition, the display rule is "Δ: to display after elapsing a predetermined time", the "interruption image" is superimposed on the image displayed in S204 or S206 after elapsing a predetermined time (S216).

As described above, the simulation display of the "interruption image" has been explained.

### (5) Image group determination processing of new "normal image"

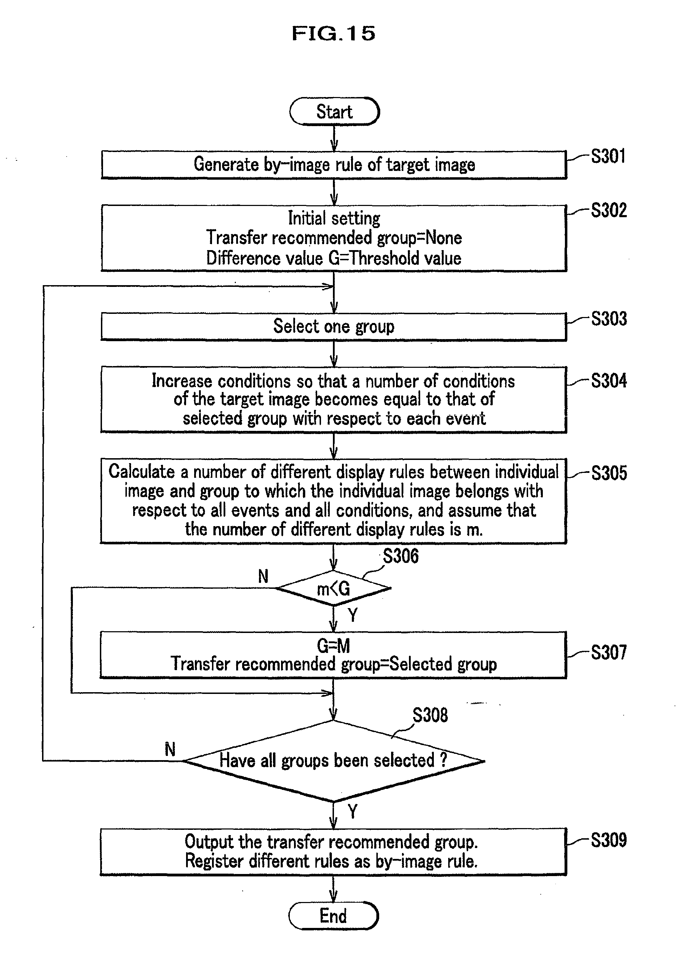

Next, an image group determination processing for newly registering a "normal image" will be explained. FIG. 15 is a flowchart for this processing. The flow starts when a display rule is set for the new "normal image" by a user through an input apparatus and a request for determining an image group of the new "normal image" is received.

The by-image rule processing unit 122 generates (S301) a by-image rule of the newly registered "normal image", which is a processing target, with a similar manner to the by-image rule setting processing described above.

Next, the by-image rule processing unit 122 sets "transfer recommended group=none, gap-value of difference G=threshold value (predetermined value)" as an initial setting (S302).

Next, the by-image rule processing unit 122 sequentially selects one image group from the image group definition information 132 (S303).

In addition, the by-image rule processing unit 122 increases conditions (S304) so that a number of conditions for each event in the common rule of the image group selected in S303 and in the interruption table of the target image is equal. A method for increasing the conditions is similar to that explained in S103 in FIG. 12 (see FIG. 13).

Next, the by-image rule processing unit 122 obtains a number of rules m which are different between the interruption table (see interruption table 240 in FIG. 13) after increasing the conditions of the target image and the common rule (see common rule 230 in FIG. 13) after increasing the conditions of the selected image group with respect to all events and all conditions (S305). A method for obtaining m is identical to that in S104.

Next, the by-image rule processing unit 122 determines whether or not m<G (S306), and if m<G, the by-image rule processing unit 122 sets as G=m, and determines that transfer recommended group=selected image group (S307).

Then, after completing processings S303 to S307 (S308: Y) for all image groups, the by-image rule processing unit 122 displays the transfer recommended group, which is finally set.

In addition, if the by-image rule processing unit 122 receives a confirmation request from a user for setting the transfer recommended group as an image group of the new "normal image", the by-image rule processing unit 122 sets the image group to which the new "normal image" belongs in the transfer recommended group. Specifically, the by-image rule processing unit 122 registers an image ID of the new "normal image" in the image ID 1323 of the group ID 1321 of the transfer recommended group in the image group definition information 132.

In addition, the by-image rule processing unit 122 registers a rule of the new "normal image", which is different from a common rule of the registered image group, as a by-image rule. Specifically, the by-image rule processing unit 122 extracts a different rule (display rule associated with event and condition) which is different from the common rule of the image group to which the new "normal image" belongs, and generates and registers the by-image rule (see FIG. 8).

### (6) Division processing of image group

The image design support tool 100 has a function to determine whether or not an image group should be divided, and to make a guidance on dividing the image group when it is determined that the image group should be divided.

As described above, any "normal image" belongs to any one of image groups. When a "normal image" in which a by-image rule is applied is increased, it happens that a plurality of "normal images", which are unusual and do not fit in with a common rule, exist in a same image group. However, in some case, each of the unusual "normal images" has a common ground one another although they are unusual from the common rule point of view. In this case, a clustering may be made for the unusual "normal images" using the common ground of the display rule as a key.

The by-image rule processing unit 122 receives an adjustment request of an image group from a user through an input apparatus. Then, the by-image rule processing unit 122 executes a clustering of the "normal images" which belong to a same image group with respect to each image group. A conventional technique can be applied to the clustering.

Specifically, if the flow shown in FIG. 12 is applied to other "normal images" within a group to which a "normal image" belongs instead of other image groups, a list of the "normal image" which has a different rule from a common rule of the group can be generated. That is, the clustering is executed using the improved-value. If the improved-value of the clustering is higher than a predetermined value, information advising the dividing of the image group is displayed. For example, as shown in FIG. 10, the improved-value 670 is displayed on the common rule setting image 600 when the image group is divided.

It is noted that a method of how to divide an image group into groups may be displayed, based on a request from a user. For example, each of the "normal images" which belongs to the original image group before the dividing may be displayed by each group generated by the dividing.

In addition, an "optimization processing" of a group may be executed automatically as follows.

First, a transfer candidate group for all "normal images" of all image groups is obtained by applying the flow in FIG. 12 to each "normal image". If the improved-value is higher than a predetermined threshold value, a processing for transferring the "normal image" to the obtained transfer candidate group is executed. After that, the dividing method described above is applied and a group having an improved-value of the clustering higher than the predetermined threshold value is divided. In addition, a difference number (corresponding to m in FIG. 12) which is a number of differences of common rules between image groups is obtained with respect to the obtained image groups by the dividing. If the difference number is smaller than a predetermined value, a processing to combine the groups is executed. For example, a common rule of one group is set in that of the other group to combine the groups into one. In this case, a display rule of a "normal image" having a different rule from a common rule to be set in an image group, to which the "normal image" belongs, is registered as a by-image rule 137.

As described above, the image design support tool according to one embodiment of the present invention has been explained.

According to the embodiment, a display rule of an "interruption image" when an interruption event occurs can be set easily. In addition, since a guidance (transfer, division) for a change of an image group to which the image belongs is displayed, it is possible to find an image in which an unusual display rule is set and to reset the image into an appropriate image group. In addition, since a simulated "interruption image" is displayed, it is easy to get an image of the "interruption image". In this case, since an alternative image (image in which name is arranged) is displayed even if an image design is not registered, at least, the image can be got.

The present invention is not limited to the embodiment. The embodiment described above can be modified in various forms within the spirits of the present invention.

## Claims

1. An image design support tool for designing a display image of an information terminal, comprising:
storage means for storing a plurality of display images and an image group to which the display images belong;
first setting means for setting a first display rule on each image group for displaying an interruption image on an interruption event occurring;
second setting means for setting a second display rule on each display image for the interruption image on an interruption event occurring as an exception of the first display rule; and
guidance means for generating and outputting guidance information on an image group to which the display image, to which the second display rule is applied, is transferred by using a difference between the first display rule and the second display rule.

2. The image design support tool according to claim 1,
wherein the guidance means obtains a difference between the first display rule and the second display rule of a display image to which the second display rule is applied on each image group, and identifies an image group in which the difference becomes minimum among the image groups as a transfer candidate image group to which the display image is transferred.

3. The image design support tool according to claim 2,
wherein the guidance means outputs a reduction level of the difference if the display image is transferred to the transfer candidate image group from an image group to which the display image currently belongs.

4. The image design support tool according to claim 2,
wherein the guidance means displays a change of the difference if the display image is transferred to the transfer candidate image group from an image group to which the display image currently belongs.

5. The image design support tool according to claim 1, further comprising:
means for arranging and displaying a name of the display image at a predetermined position if information on a design of the display image is not registered in the storage means.

6. The image design support tool according to claim 2, further comprising:
means for receiving a transfer request of an image group to which the display image belongs; and
means for transferring the image group to which the display image belongs to the transfer candidate image group.

7. The image design support tool according to claim 1, further comprising:
means for adding a display image;
means for setting a second display rule in the added display image; and
means for identifying an image group in which a first display rule having a smallest difference from the second display rule is set from a plurality of the image groups.

8. The image design support tool according to claim 1,
wherein the guidance means generates guidance information on whether or not an image group should be divided by using a difference of second display rule among the display images of the image group.

9. An image design support method for an image design support tool for designing a display image of an information terminal, the image design support tool comprising a storage means for storing a plurality of display images and an image group to which the display images belong, the image design support method comprising steps of:
a first setting step for setting a first display rule on each image group for displaying an interruption image on an interruption event occurring;
a second setting step for setting a second display rule on each display image for the interruption image on an interruption event occurring as an exception of the first display rule; and
a guiding step for generating and outputting guidance information on an image group to which the display image, to which the second display rule is applied, is transferred by using a difference between the first display rule and the second display rule.

10. The image design support method according to claim 9, further comprising steps of:
a step for obtaining a difference between the first display rule and the second display rule of a display image to which the second display rule is applied on each image group; and
a step for identifying an image group in which the difference becomes minimum among the image groups as a transfer candidate image group to which the display image is transferred.

11. The image design support method according to claim 10, further comprising a step of:
a step for outputting a reduction level of the difference if the display image is transferred to the transfer candidate image group from an image group to which the display image currently belongs.

12. The image design support method according to claim 10, further comprising a step of:
a step for displaying a change of the difference if the display image is transferred to the transfer candidate image group from an image group to which the display image currently belongs.

13. The image design support method according to claim 9, further comprising a step of:
a step for arranging and displaying a name of the display image at a predetermined position if information on a design of the display image is not registered in the storage means.

14. The image design support method according to claim 10, further comprising steps of:
a step for receiving a transfer request of an image group to which the display image belongs; and
a step for transferring the image group to which the display image belongs to the transfer candidate image group.

15. The image design support method according to claim 9, further comprising steps of:
a step for adding a display image;
a step for setting the second display rule in the added display image; and
a step for identifying an image group in which a first display rule having a smallest difference from the second display rule is set from a plurality of the image groups.

16. The image design support tool according to claim 9, further comprising a step of:
a step for generating guidance information on whether or not an image group should be divided by using a difference of second display rule among the display images of the image group.

17. A program for having a computer function as an image design support tool for designing a display image of an information terminal, the program having the computer function as:
storage means for storing a plurality of display images and an image group to which the display images belong;
first setting means for setting a first display rule on each image group for displaying an interruption image on an interruption event occurring;
second setting means for setting a second display rule on each display image for the interruption image on an interruption event occurring as an exception of the first display rule; and
guidance means for generating and outputting guidance information on an image group to which the display image, to which the second display rule is applied, is transferred by using a difference between the first display rule and the second display rule.
